# FASCICULE DE BREVET EUROPEEN

(11) **EP 0 667 191 B1**
(45) Date de publication et mention de la délivrance du brevet: **05.11.1997**
(21) Numéro de dépôt: 95400232.5
(22) Date de dépôt: 03.02.1995
(51) Int. Cl.: B08B 3/10, G02B 6/38, G02B 6/245

(54) **Dispositif de dégraissage notamment pour fibres optiques**
Vorrichtung zum Entfetten insbesondere für optische Fibern
Device for degreasing especially optical fibres

(30) Priorité: 11.02.1994 FR 9401673
(43) Date de publication de la demande: 16.08.1995
(73) Titulaire: FRANCE TELECOM, 75015 Paris (FR)
(72) Inventeur: Crespel, Daniel, F-22300 Lannion (FR); Cailleaux, Jean-Marc, F-22300 Lannion (FR); Caudrelier, Jacques, F-45190 Villorceau (FR)
(74) Mandataire: Cabinet Martinet & Lapoux

(56) Documents cités:
- EP-A- 0 036 212
- EP-A- 0 289 875
- DE-C- 3 341 919
- SOVIET PATENTS ABSTRACTS Section PQ, Week 9318, Derwent Publications Ltd., London, GB; Class P, AN 93-150130 & SU-A-1 733 127 (N CAUCASUS MACH TRACTOR DEPOT)

## Description

La présente invention a trait à un dispositif de dégraissage pour dégraisser des objets, en particulier des fibres optiques provenant d'un câble à fibres optiques dénudé.

Il est connu que les fibres optiques d'un câble à fibres optiques sont enrobées de graisse pour les protéger de l'humidité. Pour des opérations notamment de connexion de fibres optiques, il est nécessaire d'éliminer toute trace de graisse sur les fibres optiques à connecter ou épissurer.

Selon une première méthode connue, un morceau de tissu ou de papier imprégné d'un solvant, tel que pétrole désaromatisé ou alcool, est passé sur les fibres à dégraisser. Cependant, si le dégraissage obtenu peut être qualifié de satisfaisant, celui-ci n'est envisageable que pour quelques fibres optiques à dégraisser. Pour des câbles ayant plusieurs dizaines de fibres optiques, les fibres optiques doivent être dégraissées l'une après l'autre en écartant chaque fibre à dégraisser des autres fibres, ce qui rend l'opération de dégraissage longue et fastidieuse, en risquant de courber des fibres jusqu'à provoquer des fissures ou ruptures indésirables dans celles-ci.

Une seconde méthode connue plus complexe consiste à utiliser un dispositif de dégraissage par ultrasons, ou un dispositif de dégraissage par mise en mousse d'un solvant liquide tel que décrit dans la demande de brevet EP-A-0 613 734 publiée le 07 septembre 1994 et ainsi comprise dans l'état de la technique en application de l'article 54(3) de la CBE. Ces dispositifs conviennent mieux pour des câble à plusieurs dizaines de fibres qui sont dégraissés en environ dix minutes par ces dispositifs.

Un dispositif de nettoyage pour détacher des corps étrangers d'objets, tels que des copeaux de pièces usinées, selon la figure 7 de la demande de brevet EP-A-0 289 875 comprend un bac de lavage contenant un liquide de lavage dans lequel les objets à nettoyer tournent suivant un axe vertical et/ou un axe horizontal. Une pompe crée une circulation du liquide de bas en haut dans le bac. Un ventilateur introduit de l'air dans le flux de circulation de liquide à travers des buses d'un fond intermédiaire troué. Des bulles d'air montent dans le liquide et entraînent les corps étrangers vers le haut vers un trop-plein dans lequel un filtre retient les corps étrangers.

Le nettoyage des objets est fondé ainsi sur une circulation de liquide combiné avec de l'air sous pression, ce qui nécessite une alimentation électrique pour le ventilateur.

Tous ces dispositifs antérieurs nécessitent une source d'alimentation électrique et sont relativement volumineux et lourds. Ils sont ainsi difficiles à mettre en oeuvre sur des chantiers.

La présente invention vise à fournir un dispositif de nettoyage qui est autonome, c'est-à-dire indépendant de toute source d'alimentation électrique, mais également qui est portable tout en étant au moins aussi efficace que les dispositifs de nettoyage connus, en particulier permettant de dégraisser des câbles à plusieurs dizaines de fibres optiques en trente secondes environ.

A cette fin, un dispositif de nettoyage comprend un bac contenant un liquide dans lequel sont plongés des objets à nettoyer, et un moyen diffuseur logé sensiblement au fond du bac pour diffuser du gaz sous pression dans le liquide au-dessous des objets, et est caractérisé en ce qu'il comprend un récipient de gaz sous pression muni d'un embout de sortie de gaz qui est dirigé vers le fond du bac, et qui communique du gaz sous pression au moyen diffuseur, et un moyen disposé au-dessus du moyen diffuseur pour maintenir le récipient de gaz sensiblement verticalement avec l'embout de sortie de gaz dirigé vers le fond du bac.

Le dispositif selon l'invention ne nécessite pas de source d'alimentation électrique et est ainsi facilement transportable et utilisable sur des chantiers par exemple.

Le moyen pour maintenir peut comprendre un conduit communiquant avec le moyen diffuseur et muni d'une ouverture qui est plus courte que l'embout de sortie de gaz qui bute contre un épaulement entre l'ouverture et le conduit. Pour libérer du gaz sous pression, il suffit ainsi d'appuyer sur le fond du récipient pour pousser l'embout contre l'épaulement.

De préférence, le moyen diffuseur comprend des canaux ayant une extrémité commune communiquant avec un conduit recevant du gaz sortant de l'embout, et des extrémités respectives communiquant avec des trous débouchant sous les objets pour diffuser le gaz dans le liquide. Le gaz délivré est ainsi réparti dans le liquide.

Le dispositif comprend en outre une cavité située entre le moyen diffuseur et le fond du bac pour recueillir de la graisse détachée des objets lorsque le liquide est un solvant liquide pour degraisser les objets. Le moyen diffuseur peut comprend alors un moyen pour supporter les objets à dégraisser et des trous traversiers débouchant dans le solvant liquide au dessous des objets à dégraisser et dans la cavité pour recueillir la graisse. La graisse ainsi recueillie par décantation dans la cavité est ainsi complètement séparée des objets dégraissés et ne peut pas polluer ces derniers par contact.

Le moyen pour supporter comprend un évidement pour contenir les objets à dégraisser, lesdits trous traversiers débouchant dans le fond de l'évidement, ou en variante le moyen pour supporter est sensiblement plat, lesdits trous traversiers débouchant par des fraisures sur le moyen pour supporter. L'évidement ou les fraisures du support favorisent l'écoulement de la graisse vers les trous traversiers par lesquels la graisse est évacuée dans la cavité propre à la recueillir. La graisse ne demeure pas à proximité immédiate des objets à dégraisser.

Le dispositif de dégraissage peut comprendre une grille en regard des trous traversiers pour éviter qu'un objet tombe dans la cavité.

Le dispositif est notamment destiné à dégraisser des fibres optiques d'un câble à fibres optiques. Dans ce cas, le solvant est par exemple du pétrole désaromatisé.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue verticale en coupe selon la ligne brisée I-I à la figure 2 d'un dispositif de dégraissage selon l'invention ;
- la figure 2 est une vue de dessous d'une première réalisation d'un diffuseur de gaz inclus dans le dispositif de dégraissage selon l'invention ;
- la figure 3 est une vue de dessus d'une seconde réalisation d'un diffuseur de gaz ; et
- la figure 4 est une vue analogue à la figure 1, du dispositif de dégraissage contenant des fibres optiques à dégraisser.

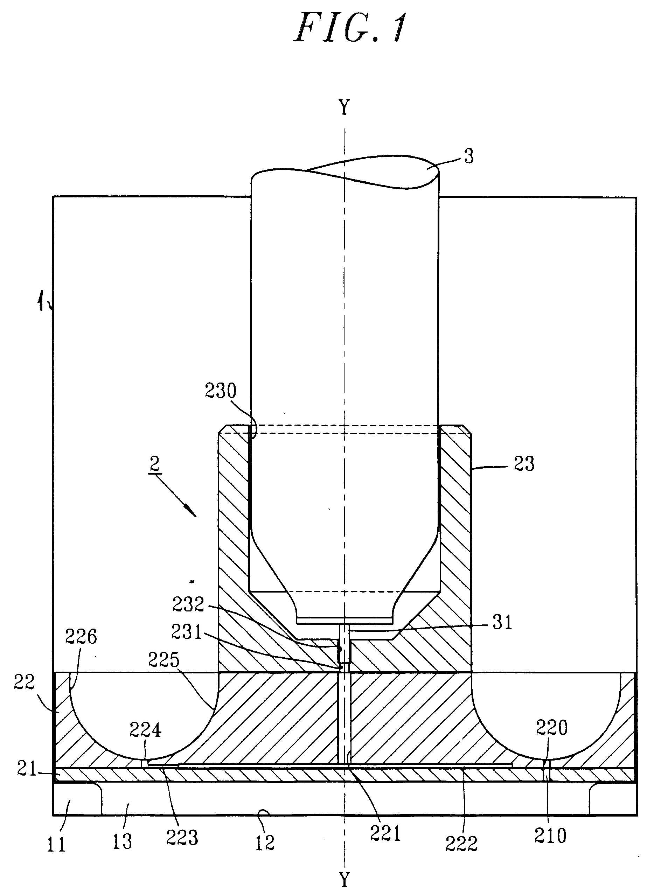

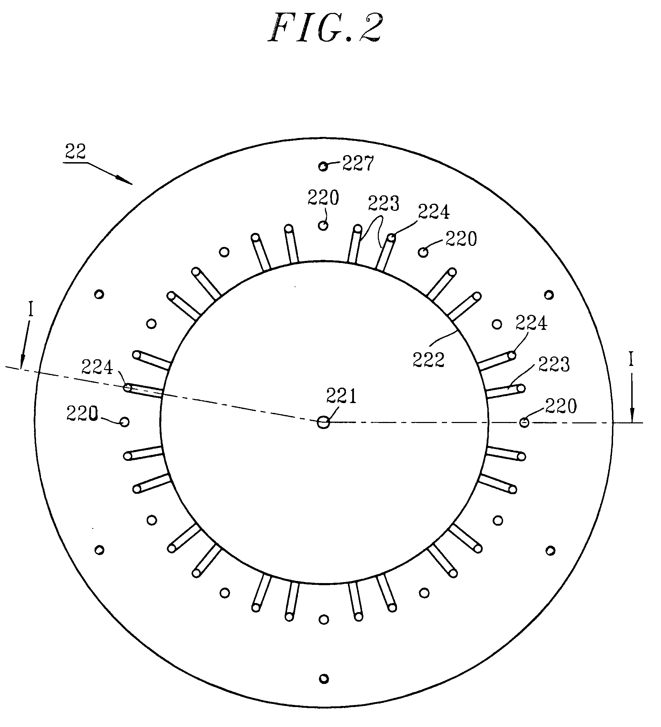

En référence aux figures 1 et 2, un dispositif pour dégraisser des objets, particulièrement l'extrémité d'un câble à fibres optiques, comprend un bac 1 muni d'une garniture intérieure 2 et un récipient de gaz sous pression sous la forme d'une bombe de gaz comprimé 3. Ce dispositif est aisément transportable puisqu'il ne pèse typiquement que deux kilogrammes environ.

La forme générale du bac 1 et ses dimensions sont adaptées aux objets à dégraisser. Ainsi, afin de fixer les idées, le bac 1 est de forme cylindrique et a un diamètre de l'ordre de 20 centimètres environ et une hauteur de l'ordre de 10 à 30 centimètres environ. L'ensemble du dispositif présente une symétrie axiale autour de l'axe vertical YY du bac 1. Le bac 1 est en matière plastique ou métallique.

Le bac 1 comprend des poignées extérieures (non représentées) ainsi qu'un couvercle amovible étanche (non représenté) afin de faciliter le transport du dispositif.

La garniture 2 comprend un premier élément 21 qui est un disque de diamètre sensiblement égal au diamètre intérieur du bac 1 et d'épaisseur de l'ordre de 5 mm. Le disque 21 est posé ou de préférence fixé par vis ou calé par ergot sur un épaulement circulaire 11 au fond du bac 1, ou est disposé sur des pieds (non représentés) équirépartis sur le fond 12 du bac 1 et fixés sur le fond 12 du bac ou sous le disque 21. Entre le fond 12 du bac 1 et le disque 21, est ainsi ménagée une cavité circulaire 13 qui est séparée du reste du volume intérieur du bac 1. Le disque 21 est percé d'une pluralité de trous traversiers 210 ayant un diamètre de l'ordre de 5 millimètres. Les trous 210 sont équirépartis circulairement autour de l'axe YY afin que la cavité 12 communique avec le reste du volume du bac 1. En variante, l'élément 21 est une grille, ou encore comprend une grille circulaire ou annulaire sur une partie de sa surface.

La garniture 2 comprend un second élément 22 qui est un disque de diamètre sensiblement égal au diamètre intérieur du bac 1 et donc au diamètre du disque 21. Comme cela apparaîtra dans la suite, le disque 22 est un diffuseur de gaz. Le disque 22 a une épaisseur de l'ordre de 2 à 4 centimètres et comprend des trous traversiers de recueil de graisse 220 ayant le même diamètre que les trous 210 du disque 21 et respectivement coaxiaux à ces derniers. Le disque 22 comprend en outre un long canal vertical central 221 débouchant sur la face inférieure du disque 22 par un évidement circulaire 222. A la périphérie de l'évidement 222 s'étendent radialement des canaux sous la forme de rainures 223 ménagées sur la face inférieure du disque 22. Les rainures 223 débouchent par des trous verticaux de diffusion de gaz 224 traversant le disque 22 sur la face supérieure du disque 22. Selon la réalisation montrée à la figure 2, chaque rainure 223 débouche par un trou 224 et les trous 224 sont répartis sur un cercle, par exemple le même cercle que les trous 220. Dans ce cas, les trous 224 et les trous 220 sont régulièrement alternés, à raison de deux trous 224 pour un trou 220.

En variante, chaque rainure 223 débouche par plusieurs trous 224 ou les trous 224 sont répartis sur un cercle, par exemple de diamètre inférieur au cercle le long duquel les trous 220 sont répartis ou encore les trous 224 sont répartis sur plusieurs cercles. Selon une autre variante, les rainures 223 et l'évidement 222 sont remplacés par des canaux internes au disque 22 reliant le canal central 221 aux trous 224, lesquels trous de diffusion de gaz 221 et 224 ne débouchent que vers la face supérieure du disque 22. Cette variante est notamment avantageuse lorsque l'élément 21 est une grille.

La face supérieure du second disque 22 est un support pour les fibres optiques à dégraisser et comprend un évidement annulaire 225 à section radiale semi-circulaire qui forme un rebord circulaire 226 sur le pourtour du disque 22. Les trous 220 et 224 débouchent dans le fond de l'évidement 225.

Le second disque 22 est disposé dans le bac 1 sur le premier disque 21 de sorte que les trous 210 et 220 soient en regard. Un assemblage à tenon et mortaise correspondante permet de positionner convenablement le disque 22 relativement au disque 21. Les disques 21 et 22 sont de préférence collés ou vissés ensemble comme indiqué en 227 à la figure 2.

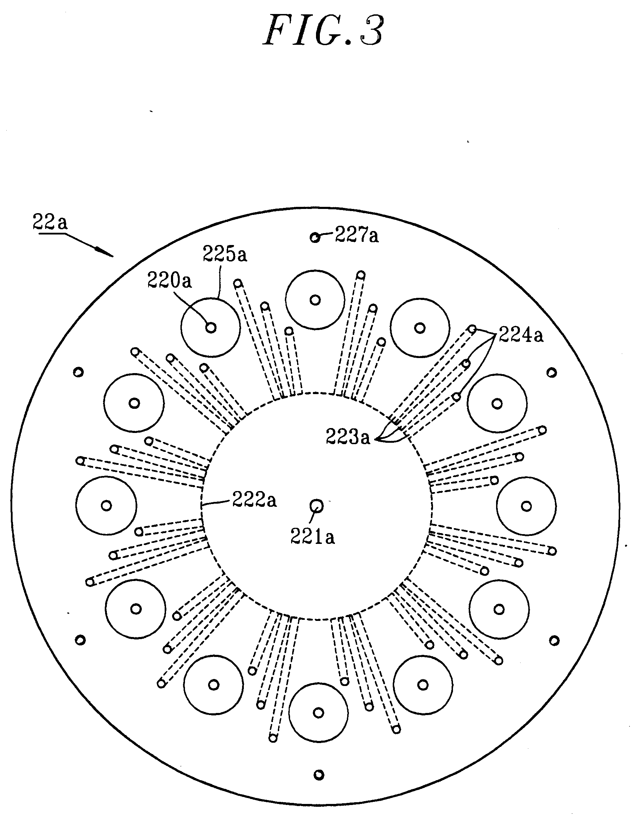

En référence à la figure 3, une seconde réalisation de diffuseur de gaz 22a présente les différences suivantes par rapport au premier diffuseur 22.

Le diffuseur 22a est un disque de diamètre sensiblement égal au diamètre intérieur du bac 1 et comprend un canal central traversier 221a débouchant sur la face inférieure du disque 22a par un évidement circulaire 222a à la périphérie duquel s'étendent des rainures radiales 223a. Ces dernières sont terminées par des trous traversiers verticaux de diffusion de gaz 224a répartis sur trois cercles concentriques. Le disque 22a comprend des trous traversiers de recueil de graisse 220a sensiblement analogues aux trous 220 précédemment décrits. Le disque 22a ne comprend pas d'évidement annulaire sur sa face supérieure qui est sensiblement plane. Chaque trou 220a débouche par une fraisure ou un lamage 225a sur la face supérieure du disque 22a. Le disque 22a représenté à la figure 3 comprend douze trous de recueil de graisse 220a et trente-six trous de diffusion de gaz 224a.

En référence à nouveau à la figure 1, la garniture 2 comprend un troisième élément 23 qui est un réceptacle propre à recevoir le récipient de gaz sous pression 3. Ce dernier est une bombe cylindrique de gaz comprimé du commerce munie d'un embout atomiseur 31. De préférence, le gaz fourni par la bombe 3 est un gaz neutre et sec, par exemple de l'air comprimé.

Le réceptacle 23 a une forme adaptée à la forme de la tête de la bombe et comprend un alésage cylindrique 230 ayant un diamètre sensiblement égal au diamètre de la bombe d'air comprimé 3. Le fond de l'alésage 230 est formé par un épaulement conique percé d'un conduit central 231 muni d'une ouverture, telle que lamage cylindrique 232 qui a sensiblement le diamètre de l'embout 31 de la bombe 3 et une longueur inférieure à celle de l'embout 31.

Le réceptacle 23 est coaxial au disque 22 de sorte que les conduits centraux 221 et 231 soient en regard. Le diamètre intérieur de l'évidement annulaire 225 du disque 22 est sensiblement égal au diamètre externe du réceptacle 23 et est supérieur au double du rayon de courbure minimal que peuvent subir les fibres optiques sans risque de fêlure ou cassure.

Le réceptacle 23 est collé ou vissé au disque 22. En variante, le réceptacle 23 et le disque 22 sont formés en une seule pièce moulée ou usinée. Selon une autre variante, le réceptacle 23 et le disque 22 sont liés de manière démontable, par emboîtement de tenon et mortaise correspondante.

Dans tous les cas, la bombe d'air comprimé 3 est logée verticalement dans le réceptacle 23 de sorte que l'embout atomiseur 31 soit dirigé vers le bas en direction du fond 12 du bac, et en appui sur l'épaulement entre le lamage 232 et le trou 231.

En variante, en fonction de la forme des objets à dégraisser, le réceptable 23 et la bombe 3 sont installés sur un bord du bac 1 plutôt qu'au centre du bac 1.

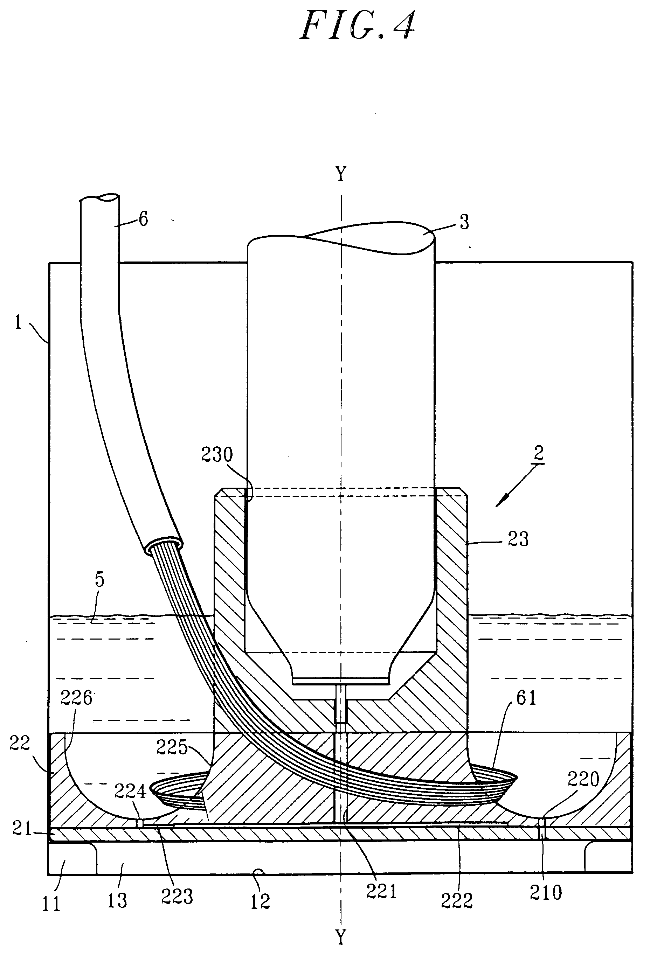

Le fonctionnement du dispositif de dégraissage est illustré en référence à la figure 4. Le dispositif comprend les éléments assemblés comme précédemment décrit, et un solvant liquide 5 est en outre versé dans le bac 1, jusqu'à une hauteur supérieure à celle de la face supérieure du disque 22 ou 22a de sorte que le solvant emplisse la cavité 13 et une partie du volume supérieur du bac 1. Le solvant liquide est par exemple du pétrole ou de l'essence désaromatisé, qui est particulièrement adapté pour dégraisser des fibres optiques. D'autres solvants sont utilisables, tels que trichloréthylène, ou un solvant comprenant un mélange isotropique de composants hydrocarbonés désaromatisés, ou encore un solvant à base d'alcool.

Un câble à fibres optiques 6 comprend un jonc rainuré en matière élastique extrudé. Le jonc enrobe une armature centrale, telle qu'un fil d'acier, qui assure une rigidité du câble pour éviter des contraintes mécaniques sur les fibres optiques. Le jonc comprend des rainures hélicoïdales réparties à la périphérie du jonc. Chaque rainure hélicoïdale contient au moins une fibre optique 61. A titre d'exemple, le câble comprend 36, 60 ou 120 fibres optiques. Une matière de remplissage enrobe les fibres optiques pour les protéger de l'humidité et également de contraintes mécaniques. La matière de remplissage est une graisse à base de silicone ou d'hydrocarbure.

En variante, le câble à fibres optiques comprend des tubes en matière plastique extrudée disposés en torsade autour d'un porteur central. Chaque tube contient des fibres optiques enrobées de graisse.

Selon une autre variante, le câble comprend une gaine de protection en forme de tube dans laquelle sont disposées des fibres optiques enrobées de graisse.

Dans tous les cas, un opérateur a préalablement dénudé le câble à fibres optiques 6 à une extrémité du câble sur une longueur comprise entre environ quelques dizaines de centimètres et 2 mètres , pour produire un "chevelu" de par exemple 36, 60 ou 120 fibres optiques. Les fibres enrobées de graisse doivent être dégraissées avant épissurrage ou connexion.

Les fibres optiques 61 provenant du câble dénudé 6 sont introduites dans le dispositif par l'ouverture supérieure du bac 1 de manière à être immergées dans le solvant liquide 5 et lovées dans l'évidement annulaire 225 et autour du réceptacle 23.

Une pression manuelle est exercée sur l'extrémité supérieure de la bombe 3, afin que l'embout atomiseur 31 soit appliqué sur le petit épaulement entre le lamage 232 et le trou 231 et recule dans la bombe 3 pour ouvrir une valve qui libère ainsi du gaz sous pression hors de la bombe. En raison de la position de la bombe 3 inversée par rapport à sa position d'utilisation habituelle, c'est-à-dire en raison de l'orientation vers le bas de l'embout atomiseur de la bombe 3, le gaz délivré par la bombe est à basse température. Le gaz détendu parcourt successivement les conduits 231 et 221, puis est réparti par l'évidement circulaire 222 dans les rainures 223 pour être diffusé par les trous 224 dans le solvant 5 au-dessous des fibres optiques 61. Grâce à l'équirépartition des trous 224 dans le disque 22, le gaz est diffusé dans tout le volume de solvant dans lequel sont plongées les fibres optiques.

Le gaz froid provoque une turbulence du solvant liquide. La graisse des fibres optiques se fige et perd ses propriétés d'adhérence. Le solvant est décanté grâce à la turbulence du solvant refroidi qui décolle la graisse des fibres optiques. La graisse tombe alors au fond de l'évidement 225 et s'écoule dans la cavité 13 par les trous 210 et 220. L'évidement annulaire 225 ou les fraisures 225a favorisent l'écoulement de la graisse vers les trous 210 et 220.

Le "chevelu" de fibres optiques est complètement dégraissé en environ 30 secondes, sans nécessiter aucun apport d'énergie électrique.

L'invention est décrite pour le dégraissage de fibres optiques. En particulier, la symétrie axiale du dispositif est bien adaptée à des objets filiformes flexibles de manière à diminuer l'encombrement du dispositif. Toutefois, le bac 1 et les éléments 21, 22, 23 peuvent être rectangulaires et longs, par exemple.

L'invention s'applique à tout type d'objets sur lesquels est déposée de la graisse ou de l'huile. A titre d'exemple, des pièces mécaniques, telles que roulements à billes, chaîne d'entraînement de moteur, vis, ou toutes pièces difficiles à dégraisser en raison de leur surface tourmentée, sont parfaitement dégraissées avec le dispositif de dégraissage selon l'invention.

## Revendications

1. Dispositif de nettoyage comprenant un bac (1) contenant un liquide (5) dans lequel sont plongés des objets à nettoyer (61), et un moyen diffuseur (22) logé sensiblement au fond (12) du bac pour diffuser du gaz sous pression dans le liquide (5) au-dessous des objets (61), caractérisé en ce qu'il comprend :
- un récipient de gaz sous pression (3) muni d'un embout de sortie de gaz (31) que est dirigé vers le fond (12) du bac, et qu communique du gaz sous pression au moyen diffuseur (22), et un moyen (23) disposé au-dessus du moyen diffuseur (22) pour maintenir le récipient de gaz (3) sensiblement verticalement avec l'embout de sortie de gaz (31) dirigé vers le fond (12) du bac.

2. Dispositif conforme à la revendication 1, caractérisé en ce que le moyen pour maintenir (23) comprend un conduit (231) communiquant avec le moyen diffuseur (22) et muni d'une ouverture (232) qui est plus courte que l'embout de sortie de gaz (31) qui bute contre un épaulement entre l'ouverture (232) et le conduit (231).

3. Dispositif conforme à la revendication 1 ou 2, caractérisé en ce que le moyen diffuseur (22, 22a) comprend des canaux (223, 223a) ayant une extrémité commune (222, 222a) communiquant avec un conduit (221, 221a) recevant du gaz sortant de l'embout (31), et des extrémités respectives communiquant avec des trous (224, 224a) débouchant sous les objets pour diffuser le gaz dans le liquide (5).

4. Dispositif conforme à l'une quelconque des revendications 1 a 3, comprenant en outre une cavité (13) située entre le moyen diffuseur (22) et le fond (12) du bac (1) pour recueillir de la graisse détachée des objets, lorsque le liquide est un solvant liquide pour dégraisser les objets

5. Dispositif conforme à l'une quelconque des revendications 1 à 4, caractérisé en ce que le moyen diffuseur (22) comprend un moyen (225) pour supporter les objets à nettoyer (61).

6. Dispositif conforme aux revendications 4 et 5, caractérisé en ce que le moyen diffuseur comprend des trous traversiers (220, 220a) débouchant dans ledit solvant liquide au dessous des objets à dégraisser et dans la cavité (13) pour recueillir la graisse.

7. Dispositif conforme à la revendication 6, caractérisé en ce que le moyen pour supporter comprend un évidement (225) pour contenir les objets à dégraisser, lesdits trous traversiers (220) débouchant dans le fond de l'évidement.

8. Dispositif conforme à la revendication 6, caractérisé en ce que le moyen pour supporter (22a) est sensiblement plat, lesdits trous traversiers (220a) débouchant par des fraisures (225a) sur le moyen pour supporter.

9. Dispositif conforme à l'une quelconque des revendications 6 à 8, comprenant une grille (21) en regard des trous traversiers (220, 220a).

10. Dispositif conforme à l'une quelconque des revendications 1 à 9, caractérisé en ce que le liquide (5) est sélectionné parmi du pétrole désaromatisé, de l'essence, du trichloréthylène, un mélange isotropique de composants hydrocarbonés et un produit à base d'alcool.

11. Dispositif conforme à l'une quelconque des revendications 1 à 10, caractérisé en ce que les objets à nettoyer (61) sont des fibres optiques d'un câble à fibres optiques, de préférence lovées sensiblement autour du récipient de gaz (3).

## Claims

1. Cleaning device comprising a tank (1) containing a liquid (5) in which pieces to be cleaned (61) are immersed, and a diffusing means (22) lodged substantially at the bottom (12) of the tank for diffusing pressurized gas into the liquid (5) under the pieces (61), characterized in that it comprises :
- a container of pressurized gas (3) having a gas outlet nozzle (31) which is directed towards the bottom (12) of the tank, and which communicates the pressurized gas through the diffusing means (22), and a means (23) disposed above the diffusing means (22) for holding the pressurized gas container (3) substantially vertical with the gas outlet nozzle (31) directed towards the bottom (12) of the tank.

2. Device according to claim 1, characterized in that the holding means (23) comprises a passage (231) communicating with the diffusing means (22) and having an opening (232) which is shorter than the gas outlet nozzle (31) which abuts against an shoulder between the opening (232) and the passage (231).

3. Device according to claim 1 or 2, characterized in that the diffusing means (22, 22a) comprises channels (223, 223a) having one common end (222, 222a) communicating with a passage (221, 221a) receiving gas released from the nozzle (31), and respective ends communicating with holes (224, 224a) discharging under the pieces to diffuse the gas into the liquid (5).

4. Device according to any one of claims 1 to 3, further comprising a cavity (13) located between the diffusing means (22) and the bottom (12) of the tank (1) to collect grease removed from the pieces, when the liquid is a liquid solvent to degrease the pieces.

5. Device according to any one of claims 1 to 4, characterized in that the diffusing means (22) comprises means (225) for supporting the pieces to be cleaned (61).

6. Device according to claims 4 and 5, characterized in that the diffusing means comprises through-holes (220, 220a) discharging into said liquid solvent under the pieces to be degreased and into the cavity (13) for collecting the grease.

7. Device according to claim 6, characterized in that the supporting means comprises a recess (225) for containing the pieces to be degreased, said through-holes (220) discharging into the bottom of the recess.

8. Device according to claim 6, characterized in that the supporting means (22a) is substantially flat, said through-holes (220a) discharging via countersinks (225a) on the supporting means.

9. Device according to any one of claims 6 to 8, comprising a grille (21) facing the through-holes (220, 220a).

10. Device according to any one of claims 1 to 9, characterized in that the liquid (5) is selected from de-aromatized kerosene, gasolene, trichlorethylene, an isotropic mixture of hydrocarbons and an alcohol-based propassage.

11. Device according to any one of claims 1 to 10, characterized in that the pieces to be cleaned (61) are optical fibers of an optical fiber cable, preferably coiled substantially around the container of gas (3).

## Patentansprüche

1. Reinigungsvorrichtung mit
einem Behälter (1), der eine Flüssigkeit (5) enthält, in die zu reinigende Gegenstände (61) eingetaucht sind, und einer Diffusionseinrichtung (22), die im wesentlichen am Boden (12) des Behälters angeordnet ist, um Druckgas in das flüssige Lösungsmittel (5) unterhalb der Gegenstände (61) einzudiffundieren,
dadurch gekennzeichnet, daß sie umfaßt:
einen Druckgasbehälter (3), der mit einem Gasauslaßstück (31) versehen ist, das auf den Boden (12) des Behälters gerichtet ist, und der Druckgas an die Diffusionseinrichtung (22) abgibt, und
eine Halteeinrichtung (23), die über der Diffusionseinrichtung (22) angeordnet ist, um den Gasbehälter (3) im wesentlichen vertikal mit zum Boden (12) des Behälters gerichtetem Gasauslaßstuck (31) zu halten.

2. Vorrichtung nach Anspruch 1, dadurch gekennzeichnet, daß die Halteeinrichtung (23) eine Leitung (231) umfaßt, die mit der Diffusionseinrichtung (22) verbunden ist und mit einer Öffnung (232) versehen ist, die kürzer als das Gasauslaßstück (31) ist, das an einer Schulter zwischen der Öffnung (232) und der Leitung (231) anschlägt.

3. Vorrichtung nach Anspruch 1 oder 2, dadurch gekennzeichnet, daß die Diffusionseinrichtung (22, 22a) Kanäle (223, 223a) umfaßt, die ein gemeinsames, mit einer Leitung (221, 221a), die aus dem Endstück (31) austretendes Gas empfängt, verbundenes Ende sowie Enden aufweisen, die mit Löchern (224, 224a) verbunden sind, die unter den Gegenständen münden, um das Gas in die Flüssigkeit (5) einzudiffundieren.

4. Vorrichtung nach einem der Ansprüche 1 bis 3, ferner mit einem zwischen der Diffusionseinrichtung (22) und dem Boden (12) des Behälters (1) angeordneten Hohlraum (13) zum Sammeln von von den Gegenständen gelöstem Fett, wenn die Flüssigkeit ein flüssiges Lösungsmittel zum Entfetten der Gegenstände ist.

5. Vorrichtung nach einem der Ansprüche 1 bis 4, dadurch gekennzeichnet, daß die Diffusionseinrichtung (22) eine Einrichtung (225) zum Unterstützen der zu reinigenden Gegenstände (61) umfaßt.

6. Vorrichtung nach den Ansprüchen 4 und 5, dadurch gekennzeichnet, daß die Diffusionseinrichtung Durchgangslöcher (220, 220a) umfaßt, die in das flüssige Lösungsmittel unterhalb der zu entfettenden Gegenstände und in den Hohlraum (13) zum Sammeln des Fetts münden.

7. Vorrichtung nach Anspruch 6, dadurch gekennzeichnet, daß die Unterstützungseinrichtung eine Aussparung (225) zum Aufnehmen der zu entfettenden Gegenstände umfaßt, wobei die Durchgangslöcher (220) in den Boden der Aussparung münden.

8. Vorrichtung nach Anspruch 6, dadurch gekennzeichnet, daß die Unterstützungseinrichtung (22a) im wesentlichen flach ist, wobei die Durchgangslöcher (220a) in Ausfräsungen (225a) an der Unterstützungseinrichtung münden.

9. Vorrichtung nach einem der Ansprüche 6 bis 8, mit einem Gitter (21) vor den Durchgangslöchern (220, 220a).

10. Vorrichtung nach einem der Ansprüche 1 bis 9, dadurch gekennzeichnet, daß die Flüssigkeit (5) ausgewählt ist unter Reinigungsbenzin, Benzin, Trichlorethylen, einem isotropen Gemisch von Kohlenwasserstoffverbindungen und einem Erzeugnis auf Alkoholgrundlage.

11. Vorrichtung nach einem der Ansprüche 1 bis 10, dadurch gekennzeichnet, daß die zu reinigenden Gegenstände (61) optische Fasern eines optischen Faserkabels sind, die vorzugsweise um den Gasbehälter (3) geschlungen sind.
